# EUROPEAN PATENT SPECIFICATION

(11) **EP 2 188 973 B1**
(45) Date of publication and mention of the grant of the patent: **24.04.2013**
(21) Application number: 08803604.1
(22) Date of filing: 03.09.2008
(51) Int. Cl.: H04L 29/06

(54) **Method, server and client apparatuses for transferring high resolution multimedia data in a high speed network**
Verfahren, Server und Client-Geräte zur Übertragung hochauflösender Multimediadaten in einem Hochgeschwindigkeitsnetzwerk
Procédé, appareil serveur et appareils client pour transférer des données multimédias haute résolution dans un réseau à vitesse élevée

(30) Priority: 19.09.2007 EP 07116777
(43) Date of publication of application: 26.05.2010
(73) Proprietor: Thomson Licensing, 92130 Issy-les-Moulineaux (FR)
(72) Inventor: AUST, Andreas, 30177 Hannover (DE); SIEMENS, Eduard, 31319 Sehnde (DE); GLÄSER, Frank, 30449 Hannover (DE); KUBSCH, Stefan, 31559 Hohnhorst (DE); KÖHLER, Ralf, 30455 Hannover (DE); BROCKE, Jens, 30880 Laatzen (DE)
(74) Representative: Schäferjohann, Volker
(86) International application number: PCT/EP2008/061633
(87) International publication number: WO 2009/037113

(56) References cited:
- AIYAGARI S; SUSTRIK M: "Transport Proposal R1" TRANSPORT SIG, [Online] 12 March 2007 (2007-03-12), pages 1-5, XP002473368 Retrieved from the Internet: URL:https://jira.amqp.org/jira/secure/atta chment/10034/transport-reduced.odt> [retrieved on 2007-03-18]
- AVT WG LADAN GHARAI USC/ISI COLIN PERKINS UNIVERSITY OF GLASGOW: "RTP Payload Format for Uncompressed Video; draft-ietf-avt-uncomp-vide o-06.txt;" IETF STANDARD-WORKING-DRAFT, INTERNET ENGINEERING TASK FORCE, IETF, CH, vol. avt, no. 6, 16 February 2004 (2004-02-16), XP015038078 ISSN: 0000-0004
- HOFFMAN G FERNANDO ET AL: "RTP Payload Format for MPEG1/MPEG2 Video; rfc2250.txt" IETF STANDARD, INTERNET ENGINEERING TASK FORCE, IETF, CH, January 1998 (1998-01), XP015008034 ISSN: 0000-0003

## Description

The invention relates to a proposal for controlling the overall data streaming operation in a high speed network, where high resolution multimedia data'is efficiently transported using a data streaming protocol.

### Background of the Invention

High speed networks are more and more available not only in video production sites, such as film or TV studios, but also in wide area distribution networks. Prominent examples are 10G Ethernet or Infiniband. The requirements for such a network are e.g. but not exhaustive:
• Packetized Transport
• Low Latency
• Synchronisation Information like Audio - Video Time Stamps included
• Multiplexing of Video and related Audio Content
• Robustness Against Errors - Bit Errors shall not be visible to Upper Layers
• Easy Support by Hardware Building Blocks
• Support of Metadata (e.g. Time, Audio, Video, Camera Parameters)

Software for post processing and video editing usually have already an IP protocol stack implemented for networking and these stacks are widely available and can be more easily adapted for the studio needs. Accordingly, there is a high demand from the studios to use IP protocol for video / audio streaming.

In studios, professional video networking means that the video content is transferred uncompressed. For HD quality, in 2k (2048 * 1080 pixels) resolution a video stream with a net data rate of 1.91 Gbit/s is resulting. Even higher data rates are resulting for 4k resolution (4096 * 2160 pixels). For HDTV formats 1080i/720p data rates from 200 to 250 Mbit/s are resulting in studio environment (uncompressed). This shows, what high speed networking means in this case.

In some cases, the video is streamed via RTP (Real-time Transport Protocol). An extended version of the standard RTP protocol has already been disclosed in a recent patent application of the applicant, namely in the European patent application EP1936908, which is prior art within the meaning of Article 54(3)EPC. The extended standard protocol considers the specific characteristics of the transmission of high resolution professional video and optional audio over high speed IT-technology based networks. In order to control the data stream, dedicated protocols, like the Real Time Streaming Protocol RTSP, are often used. Especially when embedded devices like cameras are involved, the provision of out of band control through mentioned protocols means unacceptable additional implementation efforts. Thus it's desirable to have minimum control information available in the media stream.

### Invention

It is an object of the present invention to provide for a mechanism for the overall control of the data streaming in a high speed network. More particularly, it is an object of the invention to allow the media source to signal the end of a data stream without involving out of band protocols.

Different multimedia containers are available for professional video production.

One is the Digital Moving Picture Exchange File Format (DPX). This format is standardized in SMPTE 268M. Characteristics of the format are:
• Frame based
• no explicit Audio Support
• basic Metadata Support per Frame.

Another format is the Material Exchange Format (MXF), which is standardized in SMPTE 377M. This format has the characteristics:
• Stream based
• can cover multiple Components, e.g. Audio and Video.

More sophisticated formats are the General Exchange Format (GXF) standardized in SMPTE 360M and the Advanced Authoring Format (AAF).

The invention resides in a method for transferring high resolution audio/video data in a high speed IP network as claimed in claim 1.

In connection with the present invention the DPX format is used for transporting audio, video, ... content in a network. The internal usage of the DPX format simplifies the receiver side of a transmission line. All metadata is included in the DPX frame, including the filename. So the need to transmit additional metadata through an outbound channel is minimized. If the audio option is used, the synchronized playback of video and audio is simplified, too. This is because with the reception of every video frame the associated audio is received at the same time and with the same effort, buffering and sync display efforts are minimal. Because DPX supports a lot of video formats, this file format also supports a range of standard- and high-definition video formats, including common television formats such as ITU BT.601, and standards from the Society of Motion Picture and Television Engineers (SMPTE), such as SMPTE 274M and SMPTE 296M.

The DPX file is transported with an extended RTP protocol as above mentioned. RTP is part of the IP protocol stack and is tailor made for transporting multi media data streams (audio, video, text, etc.). It is a packet-oriented protocol and normally it is operated in conjunction with the User Datagram Protocol (UDP) from the IP stack. A number of RTP packet formats are already specified for diverse video formats. These include BT.656 video, DV video, SMPTE 292M video, 12-Bit DAT audio, 20- and 24-Bit linear sampled audio, PCM audio. In the extended RTP protocol an extended RTP packet format is used with a header extension for the RTP packet header for transporting DPX frames.

Beside an extended sequence number and the addition of a time code, there are a number of flags inserted in the extra header, which indicate basic characteristics of the frame, such as frame begin, frame end, and time code type. These two flags are incompatible for the setting in one and the same packet.

In one embodiment of the invention the flags in the extended RTP header for frame begin and frame end are used for signalling the end of a data stream. Since one high resolution DPX file stretches across several RTP packets, the case that the start and end marker have to be set within one RTP packet never happens. Thus the state where the start and end flag are both set can be used to identify the end of the entire stream.

The advantage of this invention is that it allows using already specified extended RTP header information to additionally transport simple control information like the end of a stream. The extended RTP header does not need to be extended again.

The invention further resides in a server apparatus as claimed in claim 4 and a client apparatus as claimed in claim 5 for the use in the claimed method.

### Drawings

Embodiments of the invention are depicted in the drawings and will be explained hereinafter. The drawings show in:
- Fig. 1: an example of a professional network in the studio environment;
- Fig. 2: an example of an IP protocol stack;
- Fig. 3: the conventional RTP packet format, and
- Fig. 4: an RTP packet format according the invention for encapsulating DPX frames.

### Detailed Description of the Invention

Thinking about professional video production in studios, this is a field where non-linear video editing needs to be performed as well as other tasks like colour correction. This is done with workstations based on high-end personal computers and corresponding software, today. As Ethernet technology is the de facto standard in the field of computer networks, it is not surprising that there is a demand from the studios to also build their networks for post production based on Ethernet network technology. If uncompressed video data needs to be transported from a professional video camera to a data recorder, there is a very high band width needed on the network for doing the job. For example, the HD Video format 1920 x 1080i with a frame rate of 24 frames per second and 10 bit colour resolution for the RGB colours, requires a data rate of 1.6 Gbit/s for transferring the uncompressed video stream. Including audio data and to be conform with even higher video formats like 2K or 4K, the network technology should be ready to deal with much higher band width demands. Therefore, in one scenario the studios rely on the already existing 10Gbit Ethernet network technology. This network technology is based on two optical fibres one for each direction. The wave length of the light transporting the data is between 1269 and 1356 nm.

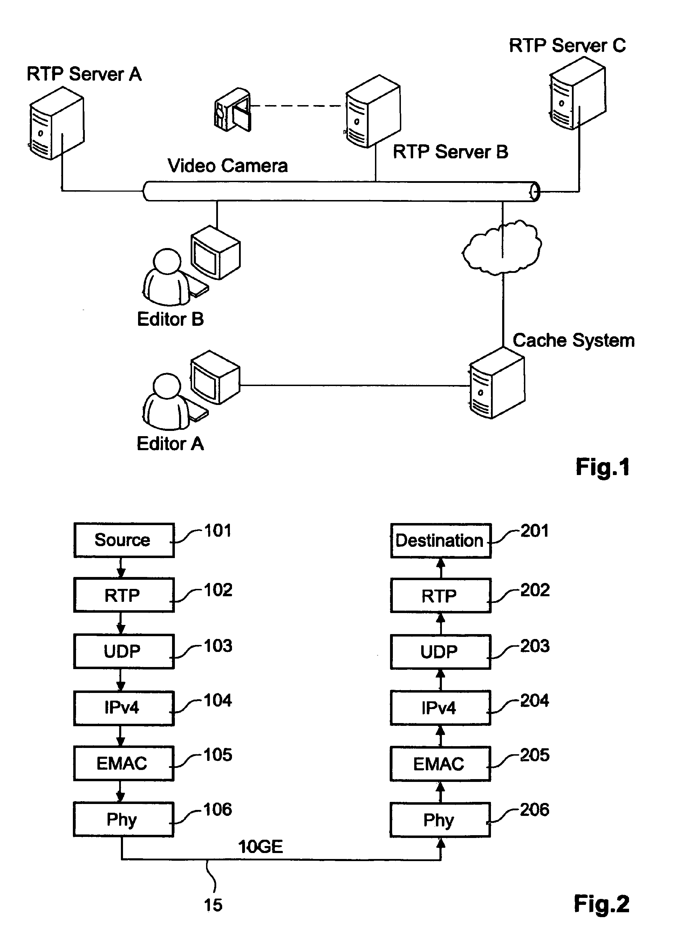

Fig 1 shows an example of a studio network. Three RTP Servers A, B, C are depicted which serve for recording audio and video content. The network for transporting data streams is based on 10 Gigabit Ethernet technology. One video camera is shown that can be connected to an RTP server for copying the data on the recording medium to the server. Two video editing places are shown, one inside the studio network and the other remote from the studio and connected via a large distribution network.

From Internet technology various protocols exist for transporting real-time data streams. In case of transferring uncompressed data streams for HDTV video production, the reliable TCP protocol cannot be used. Instead of that, it is the IP/UDP/RTP protocol stack, shown in Fig. 2 that is available for this purpose. Hereby, IP stands for the IPv4 or IPv6 Internet Protocol. UDP stands for the well known User Datagram Protocol and RTP stands for the Real-Time Transport Protocol. This protocol stack consists of unsecured protocol layers. All the services from the TCP protocol like acknowledging receipt of data packets and repeating of lost data packets is not implemented in the UDP/RTP protocols and in worst case the limited bandwidth would not be sufficient for it. As the order of transmission of packets can also be affected when transporting the packets over the LAN, the RTP protocol layer provides sequence numbering and time stamping.

Fig. 2 shows the data flow in the classical RTP/UDP/IP protocol stack of a source device 10 as well as the corresponding IP/UDP/RTP protocol stack of a destination device 20. Application software in the source device 10 is denoted with reference number 101. This application delivers video data recorded by a video camera to the transport layer in the device. With reference number 102 the RTP protocol implementation is denoted. The UDP protocol 103 follows directly below the RTP protocol layer. Below the UDP protocol there is the IP protocol IPv4 denoted with reference number 104 depicted. Ahead of the IP packet header, an Ethernet MAC header is also added to the IP packet. This is done in the Ethernet MAC layer 105. The completed Ethernet packet is transported over the 10Gbit Ethernet line by means of the corresponding physical layer which is denoted with preference number 106.

In the destination device the data flow is vice versa. The Ethernet packet is received by the physical layer 206 in the destination device. An Ethernet MAC packet is evaluated in Ethernet MAC layer 205. From the IP packet an embedded UDP packet is extracted in the IPv4 layer 204. The UDP packet is delivered to the UDP protocol layer 203. The payload data of the UDP packet concerns an RTP packet and is forwarded to the RTP protocol layer 202 in the destination device 20. Finally, the payload data of the RTP packet, this is the video data in uncompressed form, is delivered to the application software 201 in the destination device 20. As a further reference for the purpose of the disclosure of the invention it is referred to the request for command RFC768, wherein the UDP protocol is specified.

Furthermore, it is referred to RFC791, in which the IPv4 protocol is specified. For the Ethernet network technology, the two layers 106 and 105 respectively 206 and 205 need to be implemented in each of the devices. With regard to the OSI/ISO model of data communication, those two components relate to the data link layer and physical layer inside this model. A number of standards are available for Ethernet bus technology. In case of 10Gbit Ethernet, it is referred to the IEEE802.3ae standard.

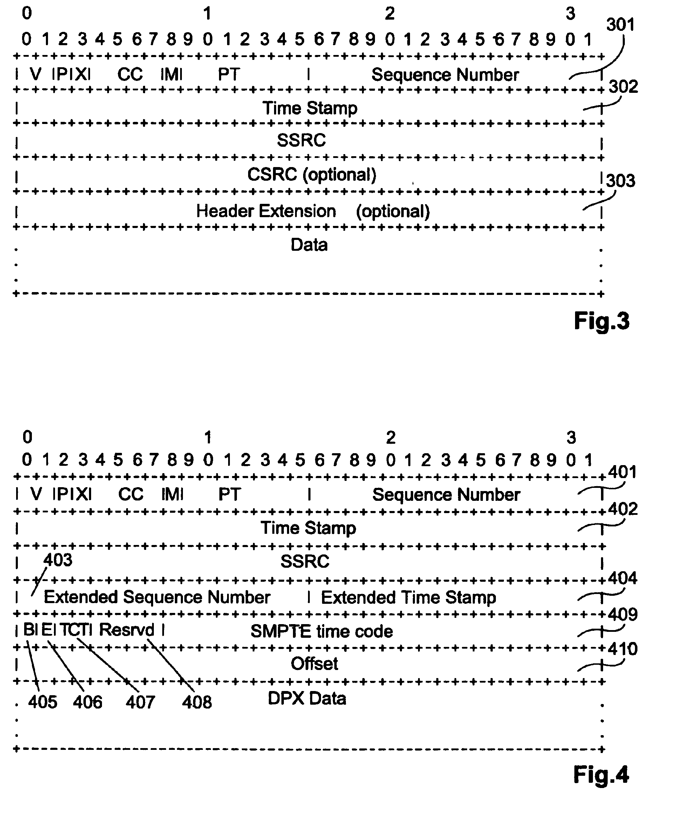

Fig. 3 shows the general format of a RTP packet header. Three entries are marked with a dedicated reference number. One is the sequence number in a corresponding 16 bit field 301 and the other is a time stamp in a 32bit field 302. The sequence number increments by 1 for each RTP data packet sent, and may be used by the receiver to detect packet losses and to restore the packet sequence. The initial value of the sequence number should be random (unpredictable) to make known plaintext-attacks on encryption more difficult, even if the source itself does not use encryption, because the packets may flow through a translator that does.

The time stamp reflects the sampling instant of the first Byte in the RTP data packet. The sample instant is derived from a clock that increments monotonically and linearly in time to allow synchronization in jitter calculations. If RTP packets are generated periodically, the nominal sampling instant as determined by the sampling clock is to be used, not a reading of the system clock. The sequence number provides for recognizing lost packets.

An optional header extension field is marked with reference number 303. Further information about the RTP header and the RTP protocol are available from Request For Comment RFC3550, in which the RTP protocol has been standardized. The entries in the RTP packet will also be explained in further detail with reference to Fig. 4.

The DPX file format is ideal to transport video data over a connection in streaming mode. The DPX header contains all necessary data to reconstruct the files with their original file names and all important video relevant metadata to process the received video. So it makes sense to transmit the DPX-files which represent a video frame per file as it is.

Fig. 4 shows a proposal how DPX files can be transported in RTP packet/s. The standard RTP header is followed by a 12-Byte payload header that extends the RTP sequence number with 2 Bytes, and the time stamp with 2 Bytes. A further 1 Byte field includes flags followed by a 3 Byte SMPTE time stamp and a 4 Byte offset. The DPX payload data follows the header data and shall be 32-bit aligned.

The fields of the fixed RTP header have their usual meaning, with the following additional notes:

### Payload Type (PT): 7 bits

This field is a dynamically allocated payload type field that designates the payload as DPX video.

### Timestamp: 32 bits

For progressive scan video, the timestamp in field 402 denotes the sampling instant of the frame to which the RTP packet belongs. Packets must not include data from multiple frames, and all packets belonging to the same frame must have the same timestamp.

A 90-kHz timestamp should be used. If higher accuracy is needed, the Extended Time Stamp RTP header extension field 404 together with the time code type (TCT) field 407 may/shall be used. A 27-MHz timestamp could be used alternatively. This is an important frequency used for video encoding.

### Marker bit (M): 1 bit

If progressive scan video is being transmitted, the marker bit denotes the end of a DPX frame. The marker bit must be set to 1 for the last packet of the video frame/field. It must be set to 0 for other packets.

### Sequence Number: 16 bits

The low-order bits for RTP sequence number are in field 401. The standard 16-bit sequence number is augmented with another 16 bits in field 403 of the header extension in order to avoid problems due to wrap-around when operating at high data rates.

### Extended Sequence Number: 16 bits

In field 403 the high order bits of the extended 32-bit sequence number, are located in network byte order.

### Extended Time Stamp: 16 bits

Field 404 carries the high order bits of the extended 32-bit time stamp number, in network byte order.

### DPX Frame Begin Identification (B): 1 bit

The entry in field 405 identifies the beginning of a DPX frame. It is set to 1 if the beginning of a DPX frame follows the header data. It is also set to 1 if the last part of the last DPX frame in the data stream follows the header data, and set to 0 otherwise.

### DPX Frame End Identification (E): 1 bit

The entry in field 407 identifies the end of a DPX frame. It is set to 1 if the RTP packet payload contains the end of a DPX frame and set to 0 otherwise.

### Time Code Type (TCT): 2 bit

The entry in this field 407 identifies the type of the used time code. Up to 4 different time codes can be addressed. The possible values are depicted in table 1.

**Table 1: Video RTP Extended Time Code Type Values**

| TCT value | Clock |
|---|---|
| 00 | 90 kHz |
| 01 | 27 MHz |
| 10 | 10GbE clock |
| 11 | Rsrvd |

### Reserved bits (Resrvd): 4 bit

The bits of field 408 are reserved for future use.

### SMPTE Time Code 24 bit

In field 409 is an SMPTE time code. The time code values of RTP packets of one DPX frame are equal. This eases the determination of the presentation time of the encapsulated DPX frame and avoids parsing into the DPX header.

### Offset: 32 bit

The offset field 410 identifies the offset of following payload data relative to the first Byte of the current DPX frame.

### Fragmentation:

DPX frames shall be fragmented so that the resulting RTP packet is smaller than the path MTU. MTU stands for maximum transmission unit that can be used on that path without fragmentation.

As a result, the two flags 405 and 406 are both set to the value 1 if the end of the last DPX frame in the data stream follows in the payload area. The server is programmed to signal the end of a stream in this way. The client is adapted to evaluate the two flags 405 and 406 not only separately, but also in combination. If the two flags are set to 1 in parallel within one RTP packet, the client ends the listening to the defined port for the UDP transmission.

In a streaming scenario where a video source, e.g., a camera, transmits video data to a destination, e.g., a disk storage device, via mentioned extended RTP protocol the camera has no means to signal the end of a transmission through that protocol. In order to allow the receiving application to safely detect the end of a stream without having to implement an expensive out of band mechanism the two start and end flags (namely DPX Frame Begin Identification (B) and DPX Frame End Identification (E)) are used to signal the last packet of a transmission.

The idea is not restricted to the use in combination with the RTP protocol. It can be applied to other protocols that contain bit fields where certain combinations of set flags don't represent a valid/possible state. This "artificial" state can be used to transport additional (control) information.

The above specification, examples and drawings provide a complete description of the manufacture and use of the composition of the invention. Since many embodiments of the invention can be made without departing from the spirit and scope of the invention, the invention resides in the claims herein after appended.

## Claims

1. Method for transferring a data stream in a high speed Internet protocol network, wherein a data packet-based streaming transport protocol is used, wherein a control field (405 to 408) is included in a header of the data packets with two flags (405, 406), wherein one flag is indicating the beginning of a Digital moving Picture Exchange file format DPX data frame transporting a video frame in the data packet payload and the other flag is indicating the end of a DPX data frame included in the data packet payload, wherein the DPX data frame is fragmented to be transported in a plurality of data packets so that both characteristics exclude each other for one and the same data packet in the application, further comprising the step of setting the first and second flag in one and the same data packet, for signalling a defined control information for the overall data streaming operation, wherein the control information for the overall data streaming concerns the information about the end of the current data stream.

2. Method according to claim 1, wherein the streaming transport protocol is the real-time streaming transport protocol RTP.

3. Method according to one of the previous claims, wherein DPX formatted data is encapsulated in an RTP packet for data streaming.

4. Server apparatus for use in the method according to one of the previous claims, with data-packet-based streaming transport protocol means, having means for generating data packets which are used for the data transport, wherein a control field (405 to 408) is included in a header of the data packet with two flags (405, 406), wherein one flag is indicating the beginning of a Digital moving Picture Exchange file format DPX data frame transporting a video frame in the data packet payload and the other flag is indicating the end of a DPX data frame included in the data packet payload, wherein the DPX frame is fragmented to be transported in a plurality of data packets so that both flags exclude each other for one and the same data packet in the application, wherein the transport protocol means are adapted to set the first and second flag in one and the same data packet, for signalling a defined control information for the overall data streaming operation to the client, wherein the control information for the overall data streaming concerns the information about the end of the current data stream.

5. Client apparatus for use in the method according to one of claims 1 to 3, with data packet-based streaming transport protocol means, having means for evaluating data packets which are used for the data transport, wherein a control field (405 to 408) is included in a header of the data packet with two flags (405, 406), wherein one flag is indicating the beginning of a Digital moving Picture Exchange file format DPX data frame transporting a video frame in the data packet payload and the other flag is indicating the end of a data frame included in the data packet payload, wherein both characteristics exclude each other for one and the same data packet in the application, wherein the streaming transport protocol means are adapted to evaluate the parallel setting of the first and second flag in one and the same data packet, and for performing a corresponding control operation for the overall data streaming operation when both flags of the data packets are set in parallel, wherein the control information for the overall data streaming concerns the information about the end of the current data stream.

6. Server/Client apparatus according to one of the claims 4 to 5, wherein the streaming transport protocol is the real-time streaming transport protocol RTP.

7. Server/Client apparatus according to one of the claims 4 to 6, wherein DPX formatted data is encapsulated in an RTP packet for data streaming.

## Patentansprüche

1. Verfahren zum Übermitteln eines Datenstroms in einem Hochgeschwindigkeitsnetzwerk für Internet-Protokolle, wobei ein Streaming-Transport-Protokoll auf Datenpaketbasis verwendet wird, wobei ein Steuerfeld (405 bis 408) in einem Kopf des Datenpakets mit zwei Flags (405, 406) enthalten ist, wobei ein Flag den Anfang eines Daten-Frames im Digital-Picture-Exchange-Datenformat DPX kennzeichnet, in dem ein Videoeinzelbild in der Nutzlast des Datenpakets transportiert wird, und das andere Flag das Ende eines DPX-Daten-Frames kennzeichnet, der in der Nutzlast des Datenpakets enthalten ist, wobei der DPX-Daten-Frame zum Transport in eine Vielzahl von Datenpaketen fragmentiert wird, so dass sich beide Kennzeichen für ein- und dasselbe Datenpaket in der Anwendung gegenseitig ausschließen,
wobei das Verfahren ferner den Schritt des Setzens des ersten und des zweiten Flags in ein- und demselben Datenpaket umfasst, um eine definierte Steuerinformation für den Gesamt-Daten-Streaming-Prozess zu melden, wobei die Steuerinformation für das Gesamt-Data-Streaming die Information über das Ende des aktuellen Datenstroms betrifft.

2. Verfahren nach Anspruch 1 wobei es sich bei dem Streaming-Transport-Protokoll um das Real-Time Transport Protocol RTP handelt.

3. Verfahren nach einem der vorhergehenden Ansprüche, wobei Daten im DPX-Format zum Daten-Streaming in einem RTP-Paket eingekapselt sind.

4. Server-Vorrichtung zur Verwendung in dem Verfahren nach einem der vorhergehenden Ansprüche, mit Streaming-Transport-Protokoll-Mitteln auf Datenpaketbasis, mit Mitteln für das Erzeugen von Datenpaketen, die für den Datentransport verwendet werden, wobei ein Steuerfeld (405 bis 408) in einem Kopf des Datenpakets mit zwei Flags (405, 406) enthalten ist, wobei ein Flag den Anfang eines Daten-Frames im Digital-Picture-Exchange-Datenformat DPX kennzeichnet, in dem ein Videoeinzelbild in der Nutzlast des Datenpakets transportiert wird, und das andere Flag das Ende eines DPX-Daten-Frames kennzeichnet, der in der Nutzlast des Datenpakets enthalten ist, wobei der DPX-Frame zum Transport in eine vielzahl von Datenpaketen fragmentiert wird, so dass sich beide Flags für ein- und dasselbe Datenpaket in der Anwendung gegenseitig ausschließen, wobei die Transport-Protokoll-Mittel geeignet sind, das erste und das zweite Flag in ein- und demselben Datenpaket zu setzen, um dem Client eine definierte Steuerinformation für den Gesamt-Daten-Streaming-Prozess zu melden, wobei die Steuerinformation für das Gesamt-Daten-Streaming die Information über das Ende des aktuellen Datenstroms betrifft.

5. Client-Vorrichtung zur Verwendung in dem Verfahren nach einem der Ansprüche 1 bis 3, mit Streaming-Transport-Protokoll-Mitteln auf Datenpaketbasis, mit Mitteln für das Auswerten von Datenpaketen, die für den Datentransport verwendet werden, wobei ein Steuerfeld (405 bis 408) in einem Kopf des Datenpakets mit zwei Flags (405, 406) enthalten ist, wobei ein Flag den Anfang eines Daten-Frames im Digital-Picture-Exchange-Datenformat DPX kennzeichnet, in dem ein Videoeinzelbild in der Nutzlast des Datenpakets transportiert wird, und das andere Flag das Ende eines Daten-Frames kennzeichnet, der in der Nutzlast des Datenpakets enthalten ist, wobei sich beide Kennzeichen für ein- und dasselbe Datenpaket in der Anwendung gegenseitig ausschließen, wobei die Streaming-Transport-Protokoll-Mittel geeignet sind, das parallele Setzen des ersten und des zweiten Flags in ein- und demselben Datenpaket auszuwerten, und zum Durchführen einer entsprechenden Steueroperation für den Gesamt-Daten-Streaming-Prozess, wenn beide Flags der Datenpakete parallel gesetzt werden, wobei die Steuerinformation für das Gesamt-Daten-Streaming die Information über das Ende des aktuellen Datenstroms betrifft.

6. Server/Client-Vorrichtung nach einem der Ansprüche 4 bis 5, wobei es sich bei dem Streaming-Transport-Protokoll um das Real-Time Transport Protocol RTP handelt.

7. Server/Client-Vorrichtung nach einem der Ansprüche 4 bis 6, wobei die Daten im DPX-Format in einem RTP-Paket zum Daten-Streaming eingekapselt sind.

## Revendications

1. Procédé pour transférer un flux de données dans un réseau de protocole Internet à vitesse élevée, dans lequel un protocole de transport de données en flux basé sur des paquets est utilisé, dans lequel un champ de contrôle (405 à 408) est inclus dans une en-tête des paquets de données comportant deux indicateurs (405, 406), où un des indicateurs signale le début d'une trame de données de format fichier DPX, Digital moving Picture Exchange, transportant une trame vidéo vers les données utiles du paquet de données et l'autre indicateur signale la fin d'une trame de données DPX incluse dans les données utiles de la trame de données, dans lequel la trame de données DPX est fragmentée pour être transportée dans une pluralité de paquets de données afin que les deux caractéristiques s'excluent l'une l'autre pour un seul et même paquet de données de l'application, comprenant en outre l'étape de paramétrage du premier et second indicateur dans un seul et même paquet de données, pour signaler une information de contrôle définie pour l'opération globale de transfert de flux de données, dans lequel les informations de contrôle du transfert global de flux de données concernent les informations relatives à la fin du flux de données actuel.

2. Procédé selon la revendication 1, dans lequel le protocole de transport de flux est le protocole RTP en temps réel de transport de flux.

3. Procédé selon l'une des revendications précédentes, dans lequel les données DPX formatées sont encapsulées dans un paquet RTP pour le transport de flux de données.

4. Appareil serveur pour utilisation dans le procédé selon une des revendications précédentes, avec un moyen de protocole de transport de flux basé sur des paquets de données, disposant d'un moyen de génération de paquets de données utilisés pour le transport de données, dans lequel un champ de contrôle (405 à 408) est inclus dans un en-tête du paquet de données comportant deux indicateurs (405, 406), dans lequel un des indicateurs signale le début d'une trame de données de format fichier DPX, Digital moving Picture Exchange, transportant une trame vidéo vers les données utiles du paquet de données et l'autre indicateur signalant la fin d'une trame de données DPX incluse dans les données utiles de la trame de données, dans lequel la trame de données DPX est fragmentée pour être transportée dans une pluralité de paquets de données afin que les deux indicateurs s'excluent l'un l'autre pour un seul et même paquet de données de l'application, dans lequel le moyen du protocole de transport est adapté pour paramétrer le premier et le second indicateur dans un seul et même paquet de données, pour signaler une information de contrôle définie pour l'opération globale de transfert de flux de données vers le client, dans lequel l'information de contrôle pour le transport global de flux de données concerne les informations relatives à la fin du flux de données actuel.

5. Appareil client pour utilisation dans le procédé selon une des revendications 1 à 3, avec un moyen de protocole de transport de flux basé sur des paquets de données, disposant d'un moyen d'évaluation des paquets de données utilisés pour le transport de données, dans lequel un champ de contrôle (405 à 408) est inclus dans un en-tête du paquet de données comportant deux indicateurs (405, 406), dans lequel un des indicateurs signale le début d'une trame de données de format fichier DPX, Digital moving Picture Exchange, transportant une trame vidéo vers les données utiles du paquet de données et l'autre indicateur signale la fin d'une trame de données incluse dans les données utiles de la trame de données, dans lequel les deux caractéristiques s'excluent l'une l'autre pour un et le même paquet de données de l'application, dans lequel le moyen du protocole de transport est adapté pour évaluer le paramétrage parallèle du premier et du second indicateur dans un et le même paquet de données, pour effectuer une opération de contrôle correspondant à l'opération globale de transfert de flux de données vers le client, quand les deux indicateurs des paquets de données sont paramétrés en parallèle, dans lequel l'information de contrôle pour le transport global de flux de données concerne les informations relatives à la fin du flux de données actuel.

6. Appareil serveur/client selon l'une des revendications 4 à 5, dans lequel le protocole de transport de flux est le protocole RTP en temps réel de transport de flux.

7. Appareil serveur/client selon l'une des revendications 4 à 6, dans lequel les données DPX formatées sont encapsulées dans un paquet RTP pour le transport de flux de données.
